# EUROPEAN PATENT APPLICATION

(11) **EP 4 796 570 A1**
(43) Date of publication of application: **26.08.2026**
(21) Application number: 25221853.2
(22) Date of filing: 09.12.2025
(51) Int. Cl.: C08F 283/00, C08F 290/06, C08G 18/10, C08G 18/12, C08G 18/24, C08G 18/48, C08G 18/67, C08G 18/76, C08G 18/79, C08J 5/04, C08J 5/24, C08L 75/16, C09J 175/16, C08F 8/30, C08F 8/32, C08L 75/08

(54) **RESIN COMPOSITION AND COMPOSITE MATERIAL, PREPARATION METHOD OF UREA-CONTAINING POLYURETHANE ACRYLATE RESIN**

(30) Priority: 25.02.2025 CN 202510209076
(71) Applicant: Swancor Innovation & Incubation Co., Ltd., Nantou City, Nantou County 540028 (TW)
(72) Inventor: CHIANG, Ting-Hsuan, Nantou City, Nantou County, 540028 (TW); KAO, Jun-Qi, Nantou City, Nantou County, 540028 (TW)
(74) Representative: Ter Meer Steinmeister & Partner

(57) **Abstract**

A resin composition including a urea-containing polyurethane acrylic resin is provided. The urea-containing polyurethane acrylic resin is prepared by amidation of isocyanate groups in a polyurethane acrylate polymer with an amine compound to form a urea group.

## Description

### BACKGROUND

### Technical Field

The invention relates to a resin composition, a composite material, and a preparation method of a resin, and in particular to a resin composition and a composite material including a urea-containing polyurethane acrylate resin, and a preparation method of the urea-containing polyurethane acrylate resin.

### Description of Related Art

Polyurethane acrylate (PUA) resin is widely applied in electronic devices, building materials, coatings, or paints. Further, modified PUA resins have been reported. For example, US 4,605,723 describes urethane urea acrylate resins based on isophorone diisocyanate (IPDI), polyether or polyesters and trimethylhexamehtylenediamine (TMD). However, how to modify the polyurethane acrylate resin to achieve broader applications and/or improved quality remains challenging. In particular, there is a need for fiber composite materials with improved inter-layer shear strength (ILSS) which are at least comparable or even superior to commercially available vinyl resin or/and or epoxy fiber composites. Further, a PUA resin should be provided which can be formed into a composite material without heating.

### SUMMARY

The invention provides a resin composition, a composite material, and a preparation method of a urea-containing polyurethane acrylate resin, which may be widely applied and has improved quality.

A resin composition of the invention includes a urea-containing polyurethane acrylate resin. The urea-containing polyurethane acrylate resin is obtainable by amidation of an isocyanate group in a polyurethane acrylate polymer with an amine compound to form a urea group, wherein preferably the polyurethane acrylate polymer is obtainable by reacting a hydroxyl-containing (meth)acrylate compound with a urethane prepolymer, the urethane prepolymer is obtainable by reacting an isocyanate compound with a polyol compound, and more preferably the equivalent ratio of the isocyanate groups in the isocyanate compound to the hydroxyl groups in the polyol compound is 15:1 to 1:1.

The resin composition of the invention preferably includes a urea-containing polyurethane acrylate resin represented by [Formula 1] described later.

A composite material of the invention includes the resin composition and a fiber material. Based on a total amount of 100 parts by weight of the resin composition, a total amount of the fiber material can be from 67 parts by weight to 240 parts by weight.

A preparation method of the urea-containing polyurethane acrylate resin of the invention includes the following steps. A polyurethane acrylate polymer is provided. An amine compound is added, and heating is performed to perform a modification reaction on the polyurethane acrylate polymer.

Based on the above, since the polyurethane acrylate resin used in the resin composition and the composite material of the invention is a modified urea-containing polyurethane acrylate resin, the resin composition and the composite material may be widely applied and has improved quality.

### DESCRIPTION OF THE EMBODIMENTS

In this specification, unless otherwise specified, when the adverb "about" is used to express a numerical value, the numerical value may be directly represented as that specific value. Additionally, when the adverb "about" is used to express the numerical value, the numerical value may include a measurement error range that is typically included in general measurement methods or an error propagation range derived from calculations.

In this specification, when expressing numerical values or numerical ranges, possible embodiments include a specific value, another specific value, or a range between the specific value and the other specific value. For example, when expressing a range from 1 to 10 and additionally specifying the values 3 and 7, an embodiment may include the specific value 1, the specific value 3, the specific value 7, the specific value 10, the range from 1 to 3, the range from 1 to 7, the range from 3 to 7, the range from 3 to 10, or the range from 7 to 10. For example, when specifying the specific values 2, 5, and 8, an embodiment may include the specific value 2, the specific value 5, the specific value 8, the range from 2 to 5, the range from 2 to 8, or the range from 5 to 8.

### <1. Urea-Containing Polyurethane Acrylate Resin>

The urea-containing polyurethane acrylate resin may be obtained by reacting an isocyanate compound, a polyol compound, a hydroxyl-containing (meth)acrylate compound, and an amine compound.

### <1.1 Isocyanate Compound>

The isocyanate compound preferably is a mixture containing at least a portion of trifunctionalized isocyanate compounds, for example, an isocyanate compound containing a portion of compounds each having at least three isocyanate groups (NCO). Generally, the isocyanate compound can contain 40-90 wt%, preferably 50-80 wt% of tri- or higher functionalized isocyanate compounds, preferably trifunctionalized isocyanate compounds, based on the total weight of the isocyanate compound.

Generally, the isocyanate compound can contain polymeric MDI (abbreviated as pMDI). Suitable pMDI can comprise of a mixture of reactive monomers and oligomers of MDI. Typically, the monomer fraction accounts for approximately 45-50wt% of the pMDI and it can contain a blend of isomers, preferably 4,4' MDI, 2,4'-MDI and 2,2'-MDI. The oligomer fraction of pMDI can comprise an isomeric mixture of oligomers with a functionality higher than two. Suitable fractions are illustrated below. Suitable pMDI can have a free isocyanate content of 20-40 wt.%, e.g. about 31-32 wt% and an average functionality of 2.1 to 3, preferably 2.3-2.9, e.g. about 2.7.

Commercially available isocyanate compounds may include: Tosoh Corporation, model: MR200, NM; Wanhua Chemical, model: PM200, MDI-50; BASF SE, model: M20S; Covestro AG, model: 44V20; Huntsman Corporation, model: 5005.

The invention does not limit the isocyanate compound to a single compound. Taking an isocyanate compound in the form of a polymer as an example, the isocyanate compound may be a mixture of polymer and monomer, such as a mixture of pMDI and toluene diisocyanate (TDI) or a mixture of pMDI and isophorone diisocyanate (IPDI); or may be a mixture of polymers of multiple monomers; or may be a copolymer, such as diphenylmethane diisocyanate (MDI-50). In an embodiment the isocyanate compound does not contain isophorone diisocyanate (IPDI).

In an embodiment, the poly(methylene phenyl isocyanate) (such as Wanhua Chemical, model: PM200, with an isocyanate group content of about 2.083 equivalents) includes a polymeric methylene diphenyl diisocyanate (MDI). Its chain extension reaction with a polyol compound, such as polypropylene glycol, provides support for an embodiment where R³ in [Formula 1] could be derived from a tri-isocyanate or higher functional isocyanate structure.

### <1.2 Polyol Compound>

The polyol compound is a difunctionalized polyol compound, for example, a difunctionalized polyether polyol compound, including but not limited to polyoxyethylene ether, polyoxyethylene alkyl ether, polyoxypropylene ether, polyoxypropylene alkyl ether, or polytetrahydrofuran. In the above embodiments, although the polyol compound is exemplified as a polymer, the polyol compound may also be in a non-polymer form.

The invention does not limit the polyol compound to a single compound. Taking a difunctionalized polyol compound in the form of a polymer as an example, the polyol compound may be a polymer of a single monomer; or may be a mixture of polymers of multiple monomers; or may be a copolymer.

In an embodiment, when the difunctionalized polyol compound is in the form of a polymer, a number average molecular weight thereof is preferably about 2000 g/mol or less.

### <1.3 Hydroxyl-Containing (Meth)acrylate Compound>

In the invention, hydroxyl-containing (meth)acrylate is an abbreviation for "hydroxyl-containing acrylate" or "hydroxyl-containing methacrylate." Multiple types of hydroxyl-containing (meth)acrylate compounds may be used in combination. Specifically, the hydroxyl-containing (meth)acrylate compound may include, but is not limited to, at least one or more of the following: hydroxyethyl acrylate, hydroxyethyl methacrylate, hydroxypropyl acrylate, or hydroxypropyl methacrylate.

### <1.4 Amine Compound>

The amine compound may include an amine polymer, a monoamine compound, a diamine compound, or combinations thereof. The amine polymer may be, for example, a polyetheramine, preferably a polyetherdiamine, in particular having a number average molecular weight of about 400 g/mol or less. The monoamine compound may include a primary aliphatic amine, a secondary aliphatic amine, a primary alicyclic amine, a secondary alicyclic amine, or combinations thereof. An example of the secondary aliphatic amine is dibutylamine. The diamine compound may include a primary aliphatic amine, a primary alicyclic amine, a secondary alicyclic amine, or combinations thereof. An example of the primary aliphatic amine is polyetheramine (D230). JEFFAMINE D-230 polyetheramine is a difunctional, primary amine with an average molecular weight of about 150-400, e.g. 230. The primary amine groups are located on secondary carbon atoms at the end of the aliphatic polyether chain. The structure of D230 is represented by the following [Formula 0].

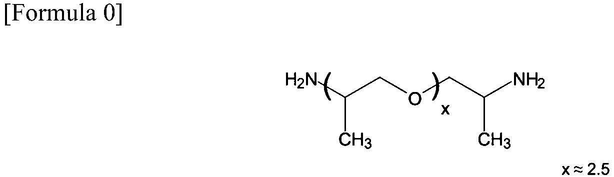

Examples of the primary alicyclic amine include isophorone diamine (IPDA) and 4,4'-diaminodicyclohexylmethane (PACM). An example of the secondary alicyclic amine is piperazine.

In an alternative embodiment the amine compound does not include trimethylhexamehtylenediamine (TMD).

### <1.5 Diluent Monomer>

The diluent monomer has a functional group suitable for reaction; or may form a corresponding free radical group. In this way, a polymer chain may be formed with a corresponding reactant through a continuous addition method to adjust viscosity/flowability. Therefore, the diluent monomer may also be referred to as a viscosity-adjusting monomer. In selection, the diluent monomer may be selected based on the type of the isocyanate compound, polyol compound, hydroxyl-containing (meth)acrylate compound, or amine compound. More appropriately, the diluent monomer may be a compound structurally similar to or having the same functional group as the isocyanate compound, polyol compound, hydroxyl-containing (meth)acrylate compound, or amine compound to facilitate the progress of the continuous addition polymerization reaction. For example, the diluent monomer may be selected from one or more of methyl (meth)acrylate, ethyl (meth)acrylate, hydroxyethyl (meth)acrylate, propyl (meth)acrylate, hydroxypropyl (meth)acrylate, tetrahydrofuran (meth)acrylate, isobornyl (meth)acrylate, cyclohexyl (meth)acrylate, styrene, methylstyrene, or vinyltoluene.

In an embodiment, based on a total amount of 100 parts by weight of the urea-containing polyurethane acrylate resin ultimately formed in a subsequent reaction, a total amount of the diluent monomer is from 30 parts by weight to 45 parts by weight.

### <1.6 Inhibitor>

The addition of an inhibitor may enhance the stability of the resin composition. In an embodiment, the inhibitor may include a phenolic compound, for example, 2,5-dihydroxytoluene or 2,6-di-tert-butylhydroxytoluene.

In an embodiment, based on a total amount of 100 parts by weight of the urea-containing polyurethane acrylate resin composition ultimately formed in a subsequent reaction, a total amount of the inhibitor is from 0.01 parts by weight to 0.03 parts by weight.

### <1.7 Proportional Relationship Among Reactants>

From the perspective of reagent formulation, it is more straightforward to describe the usage amount of each component in the composition in terms of weight or weight ratio relationships. However, from the perspective of the reactivity between components, considering factors such as the number and/or type of functional groups in a compound (particularly a difunctionalized compound intended for a specific reaction purpose) and the actual composition ratio in commercially available reagents, it may be more accurate to describe the relationship in terms of the molar ratio or molar equivalent ratio (abbreviated as equivalent ratio) of the compounds or their functional groups. The relationship between the molar ratio or equivalent ratio of functional groups and the weight or weight ratio of each component in the composition may be derived and calculated using appropriate detection methods, such as titration, infrared spectrum (IR spectrum), or nuclear magnetic resonance spectrum (NMR spectrum).

In an embodiment, an equivalent ratio of the isocyanate group in the isocyanate compound to the hydroxyl group in the polyol compound is from 15:1 to 1:1; preferably, from 10:1 to 3:1; more preferably, from 9:1 to 3:1.

In an embodiment, an equivalent ratio of the hydroxyl group in the polyol compound to the amino group in the amine compound is from 9:1 to 7:3.

In an embodiment, an equivalent ratio of the hydroxyl group in the hydroxyl-containing (meth)acrylate compound to the isocyanate group in the isocyanate compound is from 1:1.1 to 1:1.5.

### <2. Synthesis Method of Urea-Containing Polyurethane Acrylate Resin>

### <2.1 Prepolymerization Reaction>

First, the isocyanate compound and the diluent monomer are mixed and heated for later use as a first reaction reagent. A suitable heating temperature may range from 40°C to 70°C, for example, from 45°C to 60°C.

Then, the polyol compound is added to the first reaction reagent maintained at an appropriate temperature to perform a prepolymerization reaction, thereby obtaining a corresponding urethane prepolymer.

In an embodiment, the prepolymerization reaction may further include adding a catalyst. The catalyst may include an organometallic catalyst (such as tin, zinc, bismuth, or titanium) or an organic base catalyst. An example of the organometallic catalyst includes dibutyltin dilaurate (DBTDL). An example of the organic base catalyst includes 1,4-diazabicyclo[2.2.2]octane (DABCO).

In an embodiment, based on a total amount of 1 kilogram of the urea-containing polyurethane acrylate resin ultimately formed in a subsequent reaction, an amount of the catalyst added is from 50 milligrams (mg) to 200 milligrams.

In an embodiment, the prepolymerization reaction may further include adding an inhibitor to reduce or slow down unwanted polymerization reactions. Examples of the inhibitor may include butylated hydroxytoluene (BHT) or 2,5-dihydroxytoluene.

In an embodiment, after the addition of the polyol compound is completed, the reaction may be further maintained at the appropriate temperature for a sufficient period, for example, from 1 hour to 4 hours. In an embodiment, whether a sufficient proportion or amount of urethane prepolymer has been formed may be determined by appropriate detection methods, such as viscosity measurement, spectral analysis, sample titration, or thermal analysis.

### <2.2 Polymerization Reaction>

Then, after obtaining a sufficient proportion or amount of the urethane prepolymer, the hydroxyl-containing (meth)acrylate compound is added to the urethane prepolymer maintained at the appropriate temperature to perform a polymerization reaction, thereby obtaining a polyurethane acrylate polymer.

In an embodiment, based on a total added amount of the entire urethane prepolymer and the hydroxyl-containing (meth)acrylate compound, a total molar amount of the isocyanate group in the urethane prepolymer is greater than a total molar amount of the hydroxyl group in the hydroxyl-containing (meth)acrylate compound. That is, in the obtained polyurethane acrylate polymer, the isocyanate group remains present.

In an embodiment, after the addition of the hydroxyl-containing (meth)acrylate compound is completed, the reaction may be further maintained at an appropriate temperature for a sufficient period, for example, from 1 hour to 4 hours. In an embodiment, whether a sufficient proportion or amount of the polyurethane acrylate polymer has been formed may be determined by the appropriate measurement methods.

### <2.3 Modification Reaction>

Next, the amine compound is added to the polyurethane acrylate polymer maintained at the appropriate temperature to perform a modification reaction. The modification reaction essentially involves amidation of the residual isocyanate group in the polyurethane acrylate polymer with the amine compound to form a urea group.

In an embodiment, based on a total added amount of the entire urethane prepolymer, the hydroxyl-containing (meth)acrylate compound, and the amine compound, a sum of a molar amount of the hydroxyl group in the hydroxyl-containing (meth)acrylate compound and a molar amount of the amino group in the amine compound is greater than a total molar amount of the isocyanate group in the urethane prepolymer. That is, after completing the modification reaction, the residual isocyanate group in the polyurethane acrylate polymer may be substantially amidated. This is defined as a percentage ratio of a total weight of the isocyanate group to a total weight of the polyurethane acrylate polymer (i.e., a weight percentage of the isocyanate group (hereinafter referred to as the NCO value)) being less than 0.5%. The NCO value may be measured according to standard methods, such as ISO 14896:2009 Plastics - Polyurethane raw materials - Determination of isocyanate content.

In an embodiment, the amine compound may be continuously/evenly added within a range of 5 minutes to 40 minutes (preferably, within a range of 10 minutes to 30 minutes), for example, by a dropwise addition method.

An appropriate reaction temperature and an appropriate amine compound addition rate may facilitate amidation of the isocyanate group. However, if a locally instantaneous concentration of the added amine compound in the overall reactant is too high, unexpected reactions may be induced (such as excessive or unintended crosslinking), which may alter subsequent reactivity or physical properties (such as viscosity, glass transition temperature (Tg), tensile strength, or impact strength). Therefore, the amine compound must be added continuously and evenly. Furthermore, the reaction between an isocyanate group and an amine group is typically highly exothermic. Therefore, in addition to the continuous and even addition of the amine compound, meticulous control of the reaction temperature can be crucial. The reaction vessel may be equipped with a cooling system to dissipate the heat generated during the amidation, ensuring the temperature is maintained within the desired range (e.g., 40-100°C; or 40-60°C as shown in the fowling examples). Failure to control this exotherm could lead to a rapid increase in viscosity or even premature gelation of the resin, negatively impacting the properties of the final product.

In an embodiment, after completing the addition of the amine compound, the reaction may be further maintained at an appropriate temperature for a sufficient period, for example, from 1 hour to 2 hours. In an embodiment, whether the residual isocyanate group has been substantially amidated into a urea group may be determined by measuring the NCO value using the standard method.

### <3. Urea-Containing Polyurethane Acrylate Resin>

The urea-containing polyurethane acrylate resin synthesized by the method may include a polymer represented by the following [Formula 1].

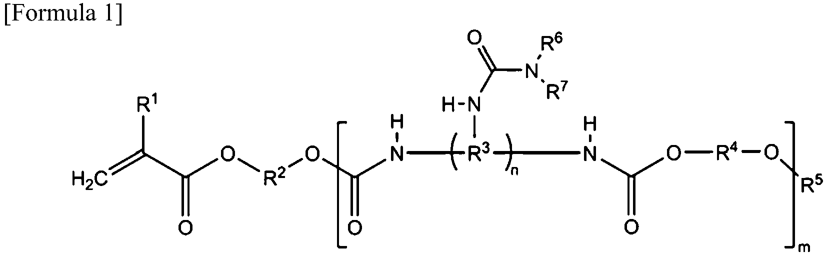

In [Formula 1], R¹ is hydrogen or methyl group. R² is an organic group containing an alkyl group, such as a connecting alkyl group containing one to three carbon atoms (i.e., -CH2-, -C₂H₄-, or -C₃H₆-). R³ is an organic group containing an aromatic group, such as a phenyl group, 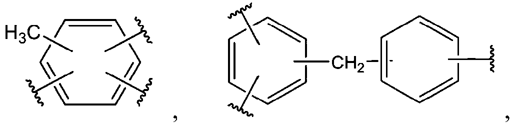 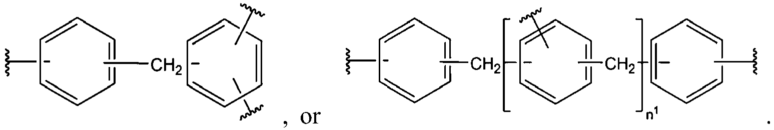 n¹ is an integer of 1 or more, for example, up to 6, preferably from 1 to 3. R⁴ is an organic group, such as an alkyl group, an alkenyl group, or an alkyl ether group. The alkyl group may be, for example, a connecting alkyl group containing one to three carbon atoms. The alkenyl group may be, for example, an allyl group. The alkyl ether group may be, for example, an ether group in which two independently connecting alkyl groups contain one to four carbon atoms, including but not limited to a dimethyl ether group (i.e., -CH₂-O-CH₂-), a methyl ethyl ether group (i.e., -CH₂-O-C₂H₄-), a diethyl ether group (i.e., -C₂H₄-O-C₂H₄-), a dipropyl ether group (i.e., -C₃H₆-O-C₃H₆-), or a dibutyl ether group (i.e., -C₄H₈-O-C₄H₈-).

In [Formula 1], R⁵ is a connecting group represented by the following [Formula 2].

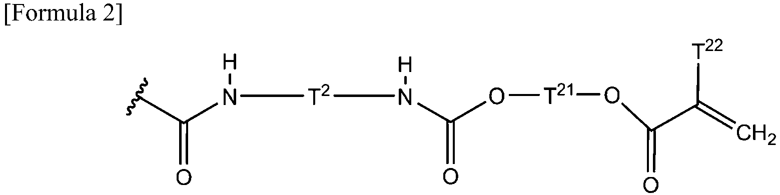

In [Formula 2], T²¹ is an organic group, for example, an alkyl group, an alkenyl group, or an alkyl ether group. The definition thereof is the same as R⁴ in the previous paragraph.

In [Formula 2], T² is an organic group containing an aromatic group, such as a phenyl group, 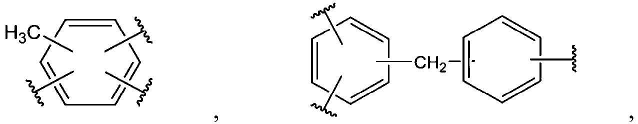 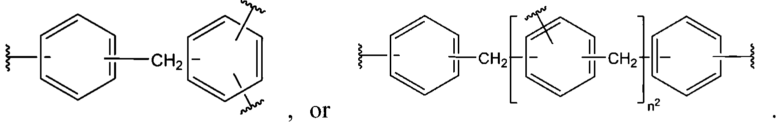 n² is an integer of 1 or more, for example, from 1 to 3.

In [Formula 2], T²² is hydrogen or methyl group.

In [Formula 1], R⁶ is an organic group, for example, a nitrogen-containing organic group. R⁷ is hydrogen or a cyclic organic moiety co-constructed with R⁶.

In [Formula 1], m and n are each an integer of 1 or more. Based on physical property considerations, m is preferably less than 100, and n is preferably less than 100. More preferably m is 20 to 60. More preferably n is 20 to 60.

In an embodiment, the urea-containing polyurethane acrylate resin of the invention may be represented by [Formula 1-1], [Formula 1-2], [Formula 1-3], [Formula 1-4], and [Formula 1-5] as shown below.

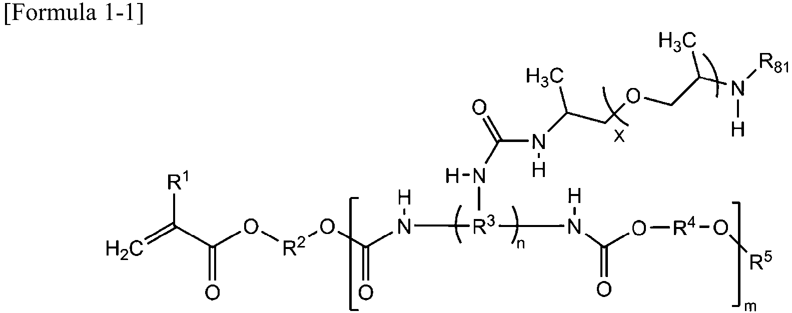

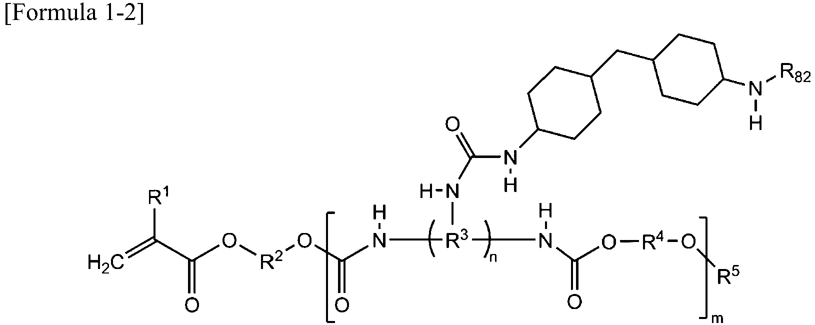

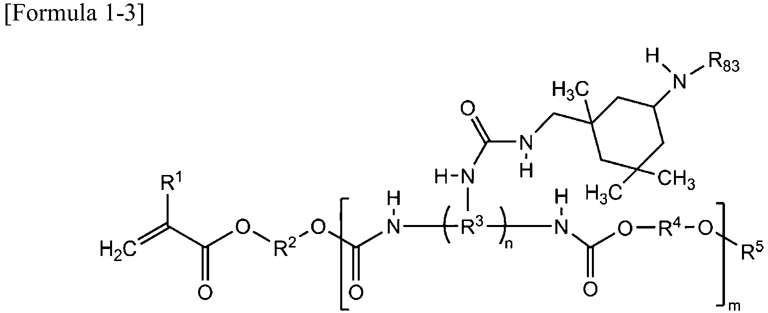

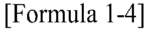

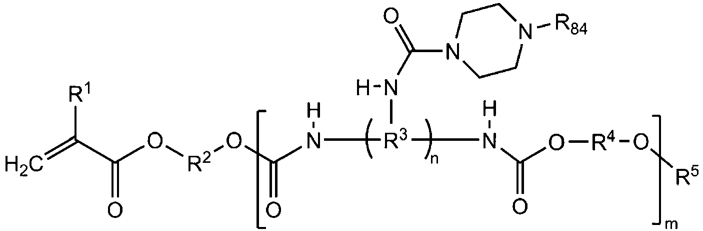

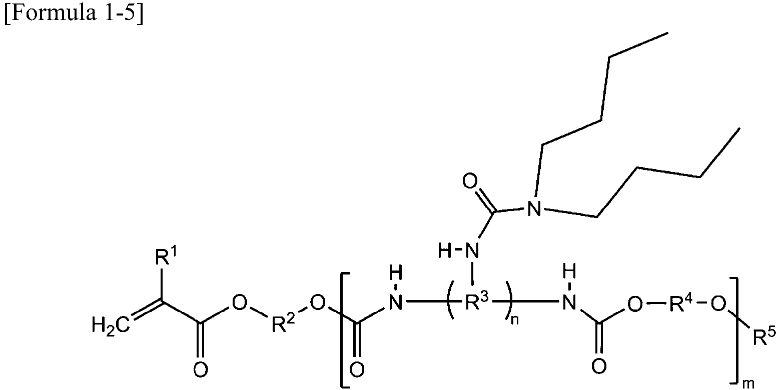

In [Formula 1-1], [Formula 1-2], [Formula 1-3], [Formula 1-4], and [Formula 1-5], R¹, R², R³, R⁴, R⁵, m, and n are defined the same as in [Formula 1].

In [Formula 1-1], [Formula 1-2], [Formula 1-3], [Formula 1-4], and [Formula 1-5], R⁸¹, R⁸², R⁸³, and R¹⁴ are each independently hydrogen or an organic group represented by the following formula: 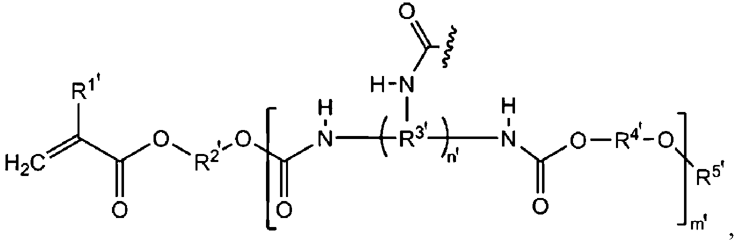 where R^{1'} , R^{2'} , R^{3'} , R^{4'}, R^{5'}, m', and n' are defined the same as R¹, R², R³, R⁴, R⁵, m, and n, respectively.

In an embodiment, the formation of the urea group in the urea-containing polyurethane acrylate resin may be further detected by a nuclear magnetic resonance spectrometer. In an embodiment, when the urea-containing polyurethane acrylate resin is analyzed using solution nuclear magnetic resonance spectroscopy, two separate signal peaks with a separation greater than 0.5 ppm may be observed in the range of 8 to 10 ppm in the hydrogen spectrum, which may be inferred to be generated by the active hydrogen of the amide group and the urea group, respectively. Since the urea-containing polyurethane acrylate resin molecule contains polar groups, the active hydrogen of the amide group and the urea group are affected by intramolecular and/or intermolecular hydrogen bonding interactions, causing the detected signal peaks to appear at a downfield shift position.

### <4. Resin Composition>

The resin composition at least includes the urea-containing polyurethane acrylate resin. That is, the resin composition at least includes a resin obtained by reacting an isocyanate compound, a polyol compound, a hydroxyl-containing (meth)acrylate compound, and an amine compound.

In an embodiment, the resin composition may further include one or more additives. The additives may be appropriately added during the synthesis of the urea-containing polyurethane acrylate resin and/or after the synthesis is completed. That is, the additives may be a part of the resin composition.

The additives may include a diluent monomer, a flame retardant, an inhibitor, a release agent, a curing agent, a curing promoter, a viscosity modifier, a wetting dispersant, or a low shrinkage agent.

### <5. Applications of the Resin Composition - Composite Material >

In an embodiment, a cast board made from the resin composition is mechanically tested and compared, and the urea-containing polyurethane acrylate resin of the invention exhibits at least comparable fundamental performance to an unmodified polyurethane acrylate resin (i.e., a polyurethane acrylate resin that does not contain a urea group); and in specific applications (such as composite material applications), the urea-containing polyurethane acrylate resin performs even better.

In an embodiment, the resin composition containing the urea-containing polyurethane acrylate resin may be mixed with other materials to form a composite material. For example, the resin composition of the embodiment (including the resin composition containing the urea-containing polyurethane acrylate resin) may be mixed with a fiber material to form a fiber reinforced polymer (FRP). The fiber material may include glass fiber, carbon fiber, polymer fiber (such as synthetic fiber), or other fibers. The fiber-reinforced polymer may have high strength and lightweight characteristics and is widely applied in fields such as aerospace, automotive, and construction.

In an embodiment, based on a total amount of 100 parts by weight of the resin composition, a total amount of the fiber material is from 67 parts by weight to 240 parts by weight.

In an embodiment, the fiber included in the composite material is carbon fiber, and the composite material may be a carbon fiber reinforced polymer (CFRP). Since the urea-containing polyurethane acrylate resin of the invention is modified by forming a urea group in the polyurethane acrylate resin structure, in the carbon fiber reinforced polymer, the modified urea group may generate polar interactions (such as hydrogen bonding) or bonding with the carbon fiber surface, thereby providing the composite material with improved inter-layer shear strength (ILSS), which may be comparable to or even superior to commercially available epoxy. Therefore, the urea-containing polyurethane acrylate resin and/or its resin composition of the invention may have broader applications and better quality.

In an embodiment, a mechanism for the improved adhesion may be attributed to the strong hydrogen bonding capability of the urea group (-NH-CO-NH-). Compared to a urethane group (-O-CO-NH-), the urea group possesses two N-H protons as hydrogen bond donors and a carbonyl oxygen as a hydrogen bond acceptor. This dual-functionality may allow for the formation of stronger and more numerous intermolecular hydrogen bonds with polar functional groups present on the surface of the carbon fiber (which is often surface-treated or sized to be more reactive). This enhanced interfacial interaction may be a factor in improving stress transfer between the resin matrix and the fiber reinforcement, thereby significantly increasing the inter-layer shear strength (ILSS) of the composite material.

In an embodiment, another aspect of the invention provides that a composite material, formed by impregnating a carbon fiber woven fabric with the urea-containing polyurethane acrylate resin, exhibits an average inter-layer shear strength of greater than or equal to 40 MPa. For example, the average inter-layer shear strength could be greater than or equal to 40.62 MPa; further, greater than or equal to 41.18 MPa; further, greater than or equal to 41.43 MPa; further, greater than or equal to 44.15 MPa; further, greater than or equal to 45.91 MPa; and even further, greater than or equal to 48.64 MPa. The shear strengths might be up to 50 MPa, preferably 55 MPa or even 60 MPa.

In an embodiment, the resin composition containing the urea-containing polyurethane acrylate resin may be dissolved in an appropriate solvent or a liquid curing agent (such as methyl ethyl ketone peroxide) and then used to impregnate the fiber material. Further, the composition can contain a curing promotor, preferably a cobalt salt, e.g. octanoic acid, cobalt salt.

### <6. Examples and Comparative Examples>

### <6.1 Preparation of the Resin Composition>

### <Example 1> Resin Composition 1

280.0 grams of poly(methylene phenyl isocyanate) (brand: Wanhua; model: PM200; isocyanate group content: 2.083 equivalents), 0.106 grams of 2,6-di-tert-butyl-p-cresol (inhibitor), and 0.148 grams of dibutyltin dilaurate (catalyst) were dispersed in 363 grams of methyl methacrylate (diluent monomer) and uniformly mixed in a reaction kettle and heated to 45°C to 60°C for later use. Next, 125.0 grams of polypropylene glycol (brand: Oriental Union Chemical; average molecular weight: 400; hydroxyl group content: 0.625 equivalents) was added dropwise to the reaction kettle over a period of 40 minutes to 60 minutes, with the temperature maintained below 60°C during the dropwise addition. After the dropwise addition was completed, the reaction was maintained at a constant temperature for 2 to 4 hours. Then, 180.75 grams of 2-hydroxyethyl methacrylate (HEMA, hydroxyl group content: 1.389 equivalents) were added dropwise over a period of 40 minutes to 60 minutes, with the temperature maintained below 60°C. After the dropwise addition was completed, the reaction was maintained at a constant temperature for 1 to 2 hours. Finally, 7.99 grams of polyetheramine (D230, average molecular weight: 230 g/mol; amine group content: 0.069 equivalents) were added dropwise to the reaction kettle over a period of 10 minutes to 30 minutes, with the temperature maintained below 60°C during the dropwise addition. After the dropwise addition was completed, the reaction was maintained at a constant temperature for 1 to 2 hours. After confirming that the NCO value was below 0.5%, 90.75 grams of methyl methacrylate were added for dilution. The final product was a resin composition 1, with a viscosity of approximately 151 centipoise (cps).

### <Example 2> Resin Composition 2

The difference between Example 2 and Example 1 was that 7.99 grams of polyetheramine were replaced with 7.30 grams of 4,4'-diaminodicyclohexylmethane (amine group content: 0.069 equivalents). The final product after the reaction was a resin composition 2, with a viscosity of approximately 213 cps.

### <Example 3> Resin Composition 3

The difference between Example 3 and Example 1 was that 7.99 grams of polyetheramine were replaced with 5.92 grams of isophorone diamine (amine group content: 0.069 equivalents). The final product after the reaction was a resin composition 3, with a viscosity of approximately 128 cps.

### <Example 4> Resin Composition 4

The difference between Example 4 and Example 1 was that 7.99 grams of polyetheramine were replaced with 3.00 grams of piperazine (amine group content: 0.069 equivalents). The final product after the reaction was a resin composition 4, with a viscosity of approximately 133 cps.

### <Example 5> Resin Composition 5

The difference between Example 5 and Example 1 was that 7.99 grams of polyetheramine were replaced with 15.97 grams of polyetheramine (amine group content: 0.139 equivalents). The final product after the reaction was a resin composition 5, with a viscosity of approximately 190 cps.

### <Example 6> Resin Composition 6

The difference between Example 6 and Example 1 was that 7.99 grams of polyetheramine were replaced with 23.96 grams of polyetheramine (amine group content: 0.208 equivalents). The final product after the reaction was a resin composition 6, with a viscosity of approximately 239 cps.

### <Comparative Example 1> Resin Composition 7

The difference between Comparative Example 1 and Example 1 was that 125.0 grams of polypropylene glycol were replaced with 138.9 grams of polypropylene glycol (hydroxyl group content: 0.694 equivalents) and no amine compound was added. The final product after the reaction was a resin composition 7, with a viscosity of approximately 121 cps.

### <6.2 Preparation of the Composite Material>

### <Example 7> Composite Material 1

Based on parts by weight, 100 parts by weight of resin composition 1 was taken, and 0.2 parts of 6% cobalt salt promoter and 1 part by weight of methyl ethyl ketone peroxide (MEKP) as curing agent were added. After thorough mixing, the mixture was impregnated into a commercially available carbon fiber woven fabric (brand: SHENG PENG APPLIED MATERIALS CO., LTD.; model: carbon fiber woven-3K, Type No. 3C118). The composite material was formed using vacuum assisted resin transfer molding (VARTM) and was cured at room temperature for 24 hours, followed by curing at 105°C for 2 hours to achieve full curing, thereby obtaining the final product of Example 7.

### <Example 8> Composite Material 2

The difference between Example 8 and Example 7 was that the resin composition 2 was used instead of the resin composition 1.

### <Example 9> Composite Material 3

The difference between Example 9 and Example 7 was that the resin composition 3 was used instead of the resin composition 1.

### <Example 10> Composite Material 4

The difference between Example 10 and Example 7 was that the resin composition 4 was used instead of the resin composition 1.

### <Example 11> Composite Material 5

The difference between Example 11 and Example 7 was that the resin composition 5 was used instead of the resin composition 1.

### <Example 12> Composite Material 6

The difference between Example 12 and Example 7 was that the resin composition 6 was used instead of the resin composition 1.

### <Comparative Example 2> Composite Material 7

The difference between Comparative Example 2 and Example 7 was that the resin composition 7 was used instead of the resin composition 1.

### <Comparative Example 3> Composite Material 8

Based on parts by weight, 31 parts of a commercially available aliphatic polyetheramine curing agent (brand: Huntsman Corporation) were added to 100 parts of a bisphenol A/bisphenol F epoxy resin mixture (brand: Nan Ya Plastics). After thorough mixing, the mixture was impregnated into a commercially available carbon fiber woven fabric. Using the processing method, the composite material was formed and then cured at 40°C for 8 hours, followed by curing at 70°C for 8 hours to achieve full curing, thereby obtaining the final product of Comparative Example 3.

### <Comparative Example 4> Composite Material 9

Based on parts by weight, 100 parts of a commercially available bisphenol Abased vinyl resin (brand: SWANCOR) were added with 0.2 parts of 6% cobalt salt promoter, 0.05 parts of an accelerator N,N-dimethylaniline (DMA), and 1 part of methyl ethyl ketone peroxide. After thorough mixing, the mixture was impregnated into a commercially available carbon fiber woven fabric. Using the processing method, the composite material was formed and then cured at room temperature for 24 hours, followed by curing at 105°C for 2 hours to achieve full curing, thereby obtaining the final product of Comparative Example 4.

### <6.3 Evaluation Items>

### <Measurement of Average Inter-Layer Shear Strength (Unit: MPa)>

In accordance with ISO 14130, composite material products of <Example 7> to <Example 12> and <Comparative Example 2> to <Comparative Example 4> were each cut into five test samples with dimensions of 20 mm × 10 mm × 2 mm. Then, the inter-layer shear strength of the test samples was measured using a universal material testing machine (brand: Instron; model: 5892). The average value of the inter-layer shear strength was calculated, and the test results are shown in <Table 1> to <Table 3>.

### <Mechanical Performance Testing of Cast Boards>

Mechanical performance testing was conducted on the resin composition 1 to the resin composition 7 (with the same curing conditions as the composite material preparation: 0.2 parts of 6% cobalt salt promoter; 1 part of methyl ethyl ketone peroxide; cured at room temperature for 24 hours, followed by curing at 105°C for 2 hours). The tensile test standard was ASTM D638, the flexural test standard was ASTM D790, and the heat deflection temperature test standard was ASTM D648. The specific test results are shown in Table 4.

**<Table 1>: Comparison of Inter-Layer Shear Strength Between Urea-Containing Polyurethane Acrylate Resin Composite Materials Modified with Different Amine Compounds and Unmodified Polyurethane Acrylate Resin Composite Materials**

| | Example 7 | Example 8 | Example 9 | Example 10 | Comparative Example 2 |
|---|---|---|---|---|---|
| Fiber Content (wt %) | 58 | 56 | 56 | 57 | 56 |
| Inter-layer Shear Strength (MPa) | 41.43 | 41.18 | 40.62 | 44.15 | 39.03 |

As shown in <Table 1>, compared with unmodified polyurethane acrylate resin composite materials, urea-containing polyurethane acrylate resin composite materials exhibit superior inter-layer shear strength.

**<Table 2>: Comparison of Inter-Layer Shear Strength Between Urea-Containing Polyurethane Acrylate Resin Composite Materials Modified with Different Amine Compounds and Epoxy Resin Composite Materials**

| | Example 7 | Example 8 | Example 9 | Example 10 | Comparative Example 3 |
|---|---|---|---|---|---|
| Fiber Content (%) | 58 | 56 | 56 | 57 | 58 |
| Inter-layer Shear Strength (MPa) | 41.43 | 41.18 | 40.62 | 44.15 | 45.25 |

As shown in <Table 2>, epoxy resin has a highly polar structure and exhibits good inter-layer adhesion with carbon fiber. Therefore, it is generally known that epoxy resin composite materials have superior inter-layer shear strength. However, the urea-containing polyurethane acrylate resin composite materials may achieve inter-layer shear strength close to that of epoxy resin composite materials.

**<Table 3>: Comparison of Inter-Layer Shear Strength Between Urea-Containing Polyurethane Acrylate Resin Composite Materials Modified with Different Ratios of Polyetheramine and Epoxy Resin Composite Materials and Vinyl Resin Composite Materials**

| | Example 7 | Example 11 | Example 12 | Comparative Example 3 | Comparative Example 4 |
|---|---|---|---|---|---|
| Resin Type | Polyurethane acrylate | | | Epoxy | Vinyl |
| Fiber Content (%) | 58 | 58 | 58 | 55 | 58 |
| Inter-layer Shear Strength (MPa) | 41.43 | 45.91 | 48.64 | 45.25 | 29.05 |

As shown in <Table 3>, increasing the equivalent number of reacted polyetheramine, which corresponds to increasing the urea group equivalent number in the polyurethane acrylate resin, effectively enhances adhesion between the carbon fiber and the resin. Moreover, the resulting inter-layer shear strength may even surpass that of epoxy resin composite materials.

**<Table 4>: Mechanical Performance Testing**

| | Example 1 | Example 2 | Example 3 | Example 4 | Example 5 | Example 6 | Comparative Example 1 |
|---|---|---|---|---|---|---|---|
| Tensile Strength (MPa) | 88.03 | 77.45 | 72.23 | 75.73 | 83.35 | 78.66 | 81.67 |
| Tensile Modulus (MPa) | 3662 | 3491 | 3520 | 3488 | 3543 | 3619 | 3404 |
| Elongation at Break (%) | 5.31 | 3.83 | 3.29 | 3.33 | 4.60 | 3.30 | 4.25 |
| Flexural Strength (MPa) | 157.71 | 144.39 | 147.46 | 145.92 | 155.60 | 154.57 | 150.23 |
| Flexural Modulus (MPa) | 3791 | 3481 | 3590 | 3543 | 3677 | 3630 | 3551 |
| Heat Deflection Temperature (°C) | 103.6 | 104.1 | 108.0 | 105.6 | 106.1 | 106.5 | 104.9 |

As shown in <Table 4>, the mechanical properties of the modified urea-containing polyurethane acrylate resin are comparable to those of the unmodified polyurethane acrylate resin.

### <7. Industrial Applicability>

The modified urea-containing polyurethane acrylate resin composite materials of the embodiments in the invention may be directly or indirectly applied in fields such as aerospace, automotive, and construction. The modified urea-containing polyurethane acrylate resin may also be used to replace unmodified polyurethane acrylate resin, offering better quality and broader applicability.

The invention is illustrated by the following items
1. A urea-containing polyurethane acrylate resin composition comprising a urea-containing polyurethane acrylate resin and optionally one or more additives, wherein the urea-containing polyurethane acrylate resin is obtainable by amidation of an isocyanate group in a polyurethane acrylate polymer with an amine compound to form a urea group.
2. The resin composition according to item 1, wherein the amine compound comprises a dibutylamine, a polyetherdiamine, an isophorone diamine, a 4,4'-diaminodicyclohexylmethane, piperazine or combinations thereof.
3. The resin composition according to item 1 or 2, wherein the polyurethane acrylate polymer is obtainable by reacting a hydroxyl-containing (meth)acrylate compound with a urethane prepolymer, the urethane prepolymer is obtainable by reacting an isocyanate compound with a polyol compound, and preferably the equivalent ratio of the isocyanate groups in the isocyanate compound to the hydroxyl groups in the polyol compound is 15:1 to 1:1.
4. The resin composition according to items 1-3, wherein at least a portion of the isocyanate compound contains a minimum of three isocyanate groups.
5. The resin composition according to items 1-4, wherein the isocyanate compound does not contain isophorone diisocyanate (IPDI).
6. The resin composition according to items 1-5, wherein the equivalent ratio of the hydroxyl group in the polyol compound to an amine group in the amine compound is 9:1 to 7:3.
7. A resin composition comprising a urea-containing polyurethane acrylate resin, wherein the urea-containing polyurethane acrylate resin is represented by the following [Formula 1]: 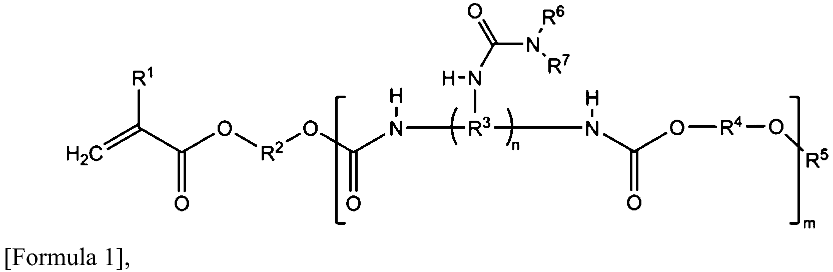 wherein in [Formula 1]:
   R¹ is a hydrogen or a methyl group; R² is a connecting alkyl group having one to three carbon atoms; R³ is an organic group containing an aromatic group; R⁴ is an alkyl group,
   an alkenyl group, or an alkyl ether group; R⁵ is a connecting group represented by the following [Formula 2]: 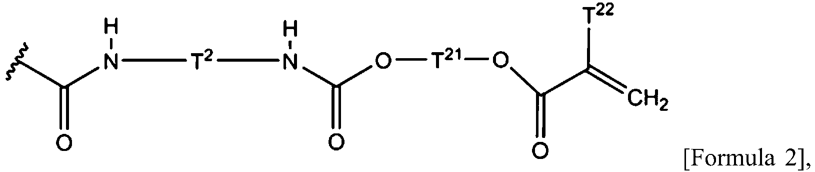
   wherein in [Formula 2]:
   T² is an organic group containing an aromatic group; T²¹, T²², and R⁶ are respectively a hydrogen or an organic group; R⁷ is a hydrogen or a cyclic organic group co-constructed with R⁶; and m and n are each an integer of 1 or more.
8. The resin composition according to any of the preceding items, wherein the weight percentage of the isocyanate group in the urea-containing polyurethane acrylate resin is less than 0.5%.
9. The resin composition according to any of the preceding items, wherein the additive further contains a diluent monomer, preferably wherein, based on a total amount of 100 parts by weight of the urea-containing polyurethane acrylate resin, a total amount of the diluent monomer is 30 parts by weight to 45 parts by weight.
10. The resin composition according to any of the preceding items, wherein the additive further contains an inhibitor, preferably wherein, based on a total amount of 100 parts by weight of the urea-containing polyurethane acrylate resin, a total amount of the inhibitor is 0.01 parts by weight to 0.03 parts by weight.
11. A composite material, comprising a urea-containing polyurethane acrylate resin composition according to items 1 - 10 and a fiber material.
12. A composite material according to item 11, wherein based on a total amount of 100 parts by weight of the resin composition, a total amount of the fiber material is 67 parts by weight to 240 parts by weight.
13. A composite material according to items 10 - 12, wherein the fiber is carbon fiber, preferably a carbon fiber woven fabric.
14. Formed composite material, obtainable by forming and curing a composite material according to items 11 - 13.
15. Formed composite material according to item 14, wherein the material has an inter-layer shear strength of greater than or equal to 40 MPa.
16. A preparation method of a urea-containing polyurethane acrylate resin composition according to items 1 to 10, comprising:
   providing a polyurethane acrylate polymer;
   adding an amine compound; and
   heating to perform a modification reaction on the polyurethane acrylate polymer,
   wherein the reaction is preferably carried out in the presence of one or more additives.
17. A preparation method of a composite material according to items 11 to 15, comprising impregnating a fiber with a urea-containing polyurethane acrylate resin composition according to items 1 to 7 and optionally forming and curing the composite material.
18. A preparation method of a composite material according to item 17, wherein the curing is carried out in the presence of a promoter and/or a curing agent.
19. Use of a urea-containing polyurethane acrylate resin for preparing a carbon fiber reinforced polymer (CFRP).
20. Use of a urea-containing polyurethane acrylate resin for preparing a carbon fiber reinforced polymer (CFRP), wherein the material has an inter-layer shear strength of greater than or equal to 40 MPa.

## Claims

1. A urea-containing polyurethane acrylate resin composition comprising a urea-containing polyurethane acrylate resin and optionally one or more additives, wherein the urea-containing polyurethane acrylate resin is obtainable by amidation of an isocyanate group in a polyurethane acrylate polymer with an amine compound to form a urea group, wherein the polyurethane acrylate polymer is obtainable by reacting a hydroxyl-containing (meth)acrylate compound with a urethane prepolymer, the urethane prepolymer is obtainable by reacting an isocyanate compound with a polyol compound, and preferably the equivalent ratio of the isocyanate groups in the isocyanate compound to the hydroxyl groups in the polyol compound is 15:1 to 1:1.

2. The resin composition according to claim 1, wherein the amine compound comprises a dibutylamine, a polyetherdiamine, an isophorone diamine, a 4,4'-diaminodicyclohexylmethane, piperazine or combinations thereof.

3. The resin composition according to claim 1, wherein at least a portion of the isocyanate compound contains a minimum of three isocyanate groups.

4. The resin composition according to any of the preceding claims, wherein the isocyanate compound does not contain isophorone diisocyanate (IPDI).

5. The resin composition according to any of the preceding claims, wherein the equivalent ratio of the hydroxyl group in the polyol compound to an amine group in the amine compound is 9:1 to 7:3.

6. The resin composition according to any of the preceding claims, wherein the weight percentage of the isocyanate group in the urea-containing polyurethane acrylate resin is less than 0.5%.

7. The resin composition according to any of the preceding claims, wherein the additive contains a diluent monomer, preferably wherein, based on a total amount of 100 parts by weight of the urea-containing polyurethane acrylate resin, a total amount of the diluent monomer is 30 parts by weight to 45 parts by weight.

8. A resin composition comprising a urea-containing polyurethane acrylate resin, wherein the urea-containing polyurethane acrylate resin is represented by the following [Formula 1]: 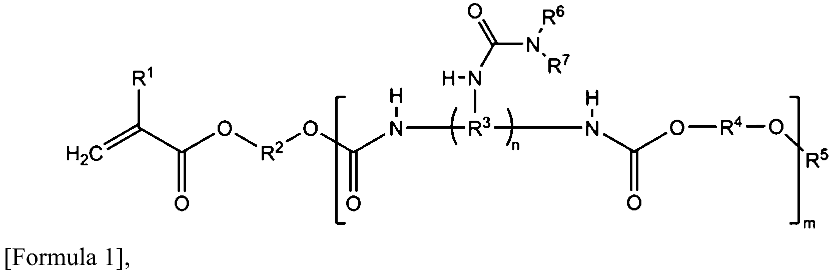 wherein in [Formula 1]:
R¹ is a hydrogen or a methyl group; R² is a connecting alkyl group having one to three carbon atoms; R³ is an organic group containing an aromatic group; R⁴ is an alkyl group,
an alkenyl group, or an alkyl ether group; R⁵ is a connecting group represented by the following [Formula 2]: 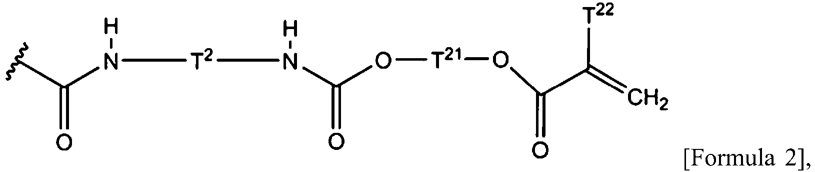 wherein in [Formula 2]:
T² is an organic group containing an aromatic group; T²¹, T²², and R⁶ are respectively a hydrogen or an organic group; R⁷ is a hydrogen or a cyclic organic group co-constructed with R⁶; and m and n are each an integer of 1 or more.

9. A composite material, comprising a urea-containing polyurethane acrylate resin composition according to any of the preceding claims and a fiber material.

10. A composite material according to claim 9, wherein, based on a total amount of 100 parts by weight of the resin composition, a total amount of the fiber material is 67 parts by weight to 240 parts by weight.

11. A composite material according to any one of claims 9-10, wherein the fiber is carbon fiber, preferably a carbon fiber woven fabric.

12. Formed composite material, obtainable by forming and curing a composite material according to any of claims 9-11.

13. Formed composite material according to claim 12, wherein the material has an inter-layer shear strength of greater than or equal to 40 MPa.

14. Use of a urea-containing polyurethane acrylate resin for preparing a carbon fiber reinforced polymer (CFRP).

15. Use of a urea-containing polyurethane acrylate resin for preparing a carbon fiber reinforced polymer (CFRP) according to claim 14, wherein the material has an inter-layer shear strength of greater than or equal to 40 MPa.
